# EUROPEAN PATENT SPECIFICATION

(11) **EP 0 849 661 B1**
(45) Date of publication and mention of the grant of the patent: **05.03.2003**
(21) Application number: 97309830.4
(22) Date of filing: 05.12.1997
(51) Int. Cl.: G06F 3/023

(54) **Letter input apparatus and method**
Vorrichtung und Verfahren zur Eingabe von Buchstaben
Dispositif et méthode d'introduction de caractères

(30) Priority: 19.12.1996 JP 33952096
(43) Date of publication of application: 24.06.1998
(73) Proprietor: SONY CORPORATION, Tokyo 141 (JP)
(72) Inventor: Masuda, Ikuko, Sony Corporation, Shinagawa-ku, Tokyo 141 (JP); Okamoto, Naoya, Sony Corporation, Shinagawa-ku, Tokyo 141 (JP)
(74) Representative: Turner, James Arthur

(56) References cited:
- EP-A- 0 615 195
- EP-A- 0 732 646
- EP-A- 0 782 064
- PATENT ABSTRACTS OF JAPAN vol. 95, no. 8, 29 September 1995 & JP 07 129294 A (ALPS ELECTRIC CO. LTD.), 19 May 1995,
- PATENT ABSTRACTS OF JAPAN vol. 18, no. 278 (P-1743), 26 May 1994 & JP 06 044214 A (BROTHER IND. LTD.), 18 February 1994,

## Description

The present invention relates to a letter input apparatus and methods.

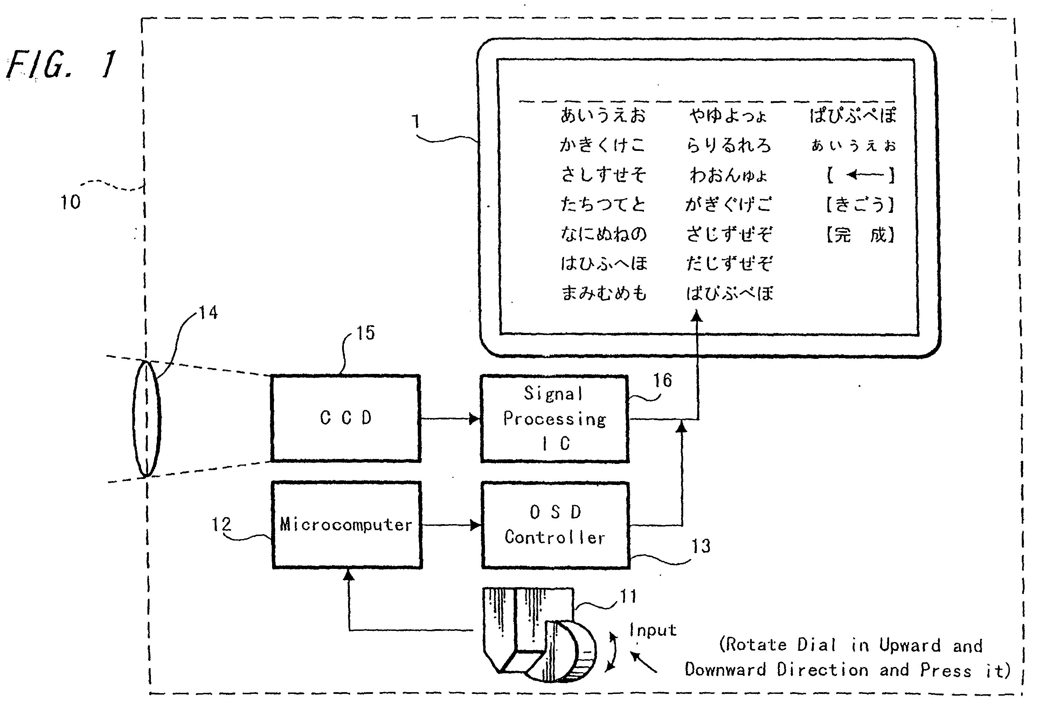

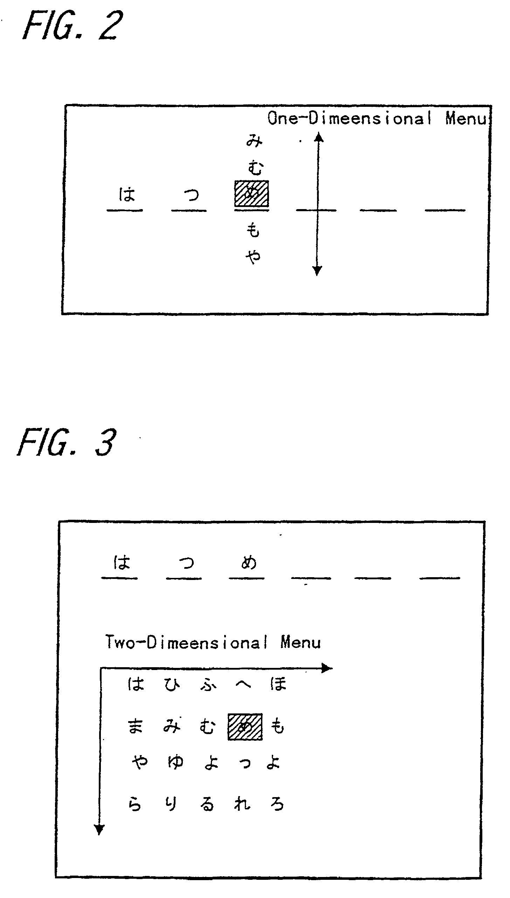

In an exemplary case of inputting a letter on a menu screen by using a control dial input apparatus, there have been only three operating functions of the control dial input apparatus, namely, an upward direction revolution, a downward direction revolution and a dial press-down. Therefore, as shown in FIG. 3, it has been impossible to input a letter in a two dimensional fashion and, as shown in FIG. 2, it has been necessary that each letter is inputted by using one dimensional menu. FIG. 2 shows an operation carried out when letters of 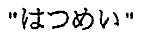 (which are four letters of Japanese letters called "hiragana" formed of about fifty letters shown in FIG. 1 and which means an invention in English) are to be input. In FIG. 2, in a case when, for example, a third letter 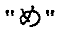 (pronounced as "ME") is to be inputted after a first letter 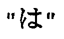 (pronounced as "HA") and a second letter 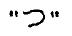 (pronounced as "TSU") are inputted, the control dial input apparatus has to be revolved to change over a letter displayed on a menu display from 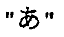 (pronounced as "A") to 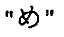 through 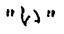 (pronounced as "I"), 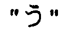 (pronounced as "U"), 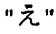 (pronounced as "E"), ···, 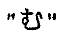 (pronounced as "MU") in this order (which is similar to an alphabetical order), and then the dial is pressed down to select the 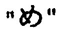 .

Instead of using the control dial input apparatus, there have been some apparatus for inputting a letter in a two dimensional fashion, as shown in FIG. 3, by using two dimensional input apparatus such as a cross key, a track ball and the like. However, although a display of the two dimensional input apparatus is easy to be looked, there is a problem that a space for it to be installed becomes larger and at the same time it is time consuming for operation. Therefore, as for a portable apparatus, the control dial input apparatus capable of realizing space saving has been used in many cases.

Kinds of letters to be inputted amount to about 140 in kinds of letters including a "hiragana", a numeral, a symbol, an alphabet and the like. Therefore, when the letter is input by using only the one dimensional menu, a problem has occurred that it takes much time and trouble in selecting a letter.

European Patent Application Publication Number EP-A-0 615 195 describes an apparatus for displaying menu options with a minimum of key strokes. According to this apparatus, a two-dimensional array of menu options is displayed in response to pressing a key on a keyboard and a user selects a particular row of the displayed menu options by pressing a row selector key until the desired row is highlighted in the display. A particular function is then selected from the highlighted row by pressing a menu key.

Japanese Patent Publication Number JP -A- 07 129 294 describes a character input device operable using one hand whereby a pivot lever is pivoted using the thumb to select a vowel and a seesaw switch is pushed using the index finger and middle finger to select a consonant.

According to a first aspect of the invention a letter input apparatus is provided comprising:
an input unit operable to generate a command signal in response to a forward revolution, a backward revolution or a press-down of said input unit;
a control unit operable to generate letter information in dependence upon said command signal;
a conversion unit operable to generate image information in dependence upon said letter information; and
a display unit operable to display said image information generated by said conversion unit;
wherein said display unit is operable to two-dimensionally arrange and display letters available for selection via said input unit and said control unit has a first mode for selecting a group of letters from those displayed on said display unit and a second mode for selecting a given letter from said selected group of letters.

Embodiments of the present invention can provide a letter input apparatus which makes it possible to speedily and easily select a necessary letter from many kinds of letters with a control dial input device.

According to a second aspect of the invention a method is provided comprising the steps of:
generating a command signal in response to a forward revolution, a backward revolution or a press-down of an input unit;
generating letter information in dependence upon said command signal;
generating image information in dependence upon said letter information; and
displaying said image information to a user;
wherein said letters that are available for selection via said input unit are two-dimensionally arranged and displayed to the user, a first mode is used for selecting a group of letters from those displayed, and a second mode is used for selecting a given letter from said selected group of letters.

The invention will now be described by way of example with reference to the accompanying drawings, throughout which like parts are referred to by like references, and in which;
FIG. 1 is a block diagram showing a preferable embodiment of the present invention;
FIG. 2 is an example of a screen display of a conventional control dial input apparatus;
FIG. 3 is an example of a screen display of a conventional cross key or the like;
FIG. 4 is an example of a screen display of a video camera showing a preferable embodiment of the present invention;
FIG. 5 is an example of a screen display of a video camera showing a preferable embodiment of the present invention;
FIG. 6 is an example of a screen display of a video camera showing a preferable embodiment of the present invention;
FIG. 7 is an example of a screen display of a video camera which is a preferable embodiment of the present invention; and
FIG. 8 is an example of a screen display of a video camera showing a preferable embodiment of the present invention.

FIG. 1 is a block diagram showing an arrangement of a video camera equipped with a letter input apparatus as a preferable embodiment of the present invention. In FIG. 1, reference numeral 1 is a display screen of the display unit such as an LCD and the like loaded on a video camera, reference numeral 10 is a video camera equipped with a letter input control apparatus, reference numeral 11 is a control dial input apparatus as an input unit for inputting a letter, 12 is a microcomputer as a control unit, reference numeral 13 is an OSD (On Screen Display) controller for converting a letter input to an image, reference numeral 14 is a lens, reference numeral 15 is a CCD (Charge Coupled Device) and reference numeral 16 indicates a signal processing IC.

On the display screen 1 are overlappingly displayed image information inputted by the lens 14 and letter information generated by the OSD controller 13. An image incident on the lens 14 is converted to an electric signal by the CCD 15 and, by the signal processing IC 16, is converted to an image information capable of being displayed on the display screen 1. Meanwhile, based on an input signal by the control dial input apparatus 11, the OSD controller 13 converts the letter information to the image information capable of being displayed on the display screen 1 under the control of the microcomputer 12.

At that time, the control dial input apparatus 11 can transmit three kinds of control signals to the microcomputer 12, such as an upward direction revolution, a downward direction revolution and a dial press-down.

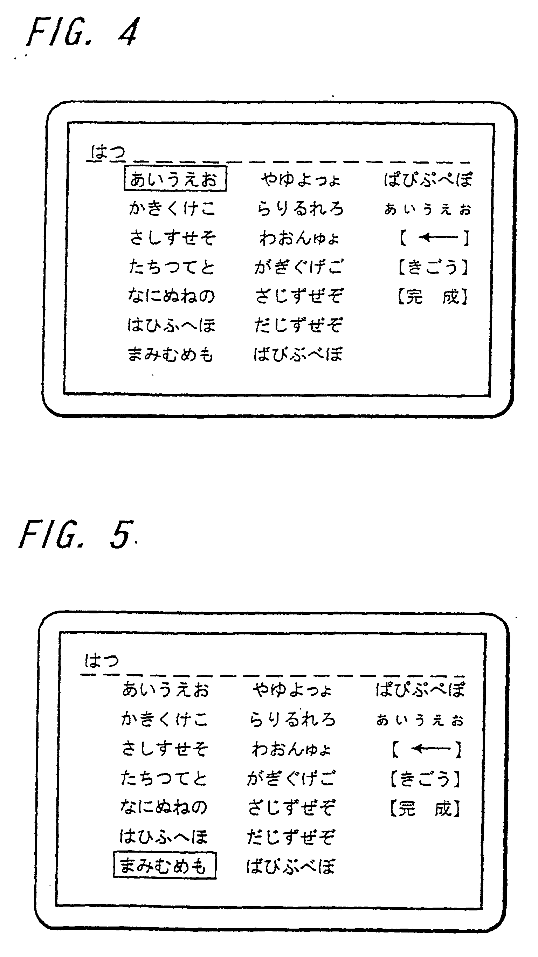

Hereinafter, with reference to FIG. 4 through FIG. 8, how the letter information displayed on the display screen 1 corresponding to a control signal from the control dial input apparatus 11 is generated by the microcomputer 12 and the OSD controller 13 will be explained. Meanwhile, FIG. 4 through FIG. 8 are diagrams for representing displayed contents on the display screen 1 at a time of producing a title to be attached to a video image by using the control dial input apparatus 11.

FIG. 4 is a diagram showing a screen in a state before a third letter 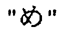 is about to be inputted and displayed at a title area (which is an area of 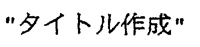 (pronounced as "TAITORUSAKUSEI") shown in FIG. 4) after a first letter 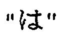 and a second letter 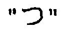 are inputted at a time of producing a title called 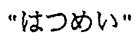 . On the screen, 80 hiragana letters form groups of every 5 letters, and at this time point, a group 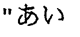 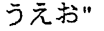 (pronounced as "A I U E O") is being selected. In order to input the third letter 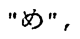 because the 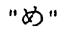 belongs to a group 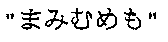 (pronounced as "MA MI MU ME MO"), the control dial input apparatus 11 is revolved downward to select the group 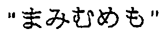 as shown in FIG. 5. At this juncture, the group selected on the screen shifts from 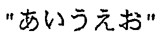 to 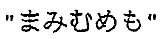 through 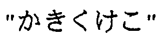 (pronounced as "KA KI KU KE KO"), 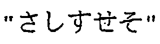 (pronounced as "SA SHI SU SE SO"), 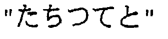 (pronounced as "TA CHI TSU TE TO"), 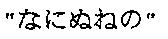 (pronounced as "NA NI NU NE NO"), 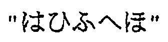 (pronounced as "HA HI FU HE HO") in this order.

Although the letter 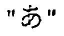 is apart from the letter 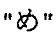 by 33 letters, it takes only six lines to travel according to the selection by the above mentioned groups.

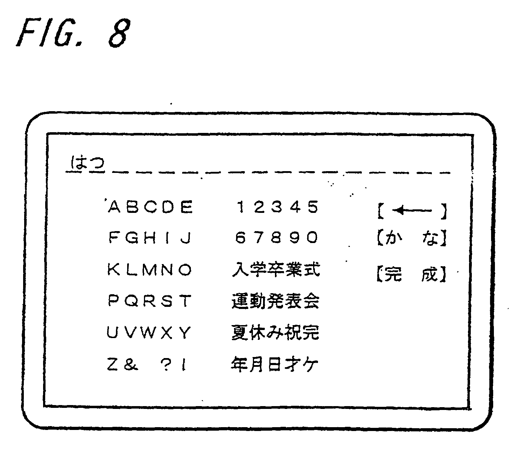

Meanwhile, when 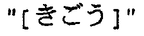 (which is pronounced as "KIGOU" and means a symbol in English) is selected in FIG. 4, the screen changes over to a screen for displaying an alphabet, a symbol and the like as shown in FIG. 8.

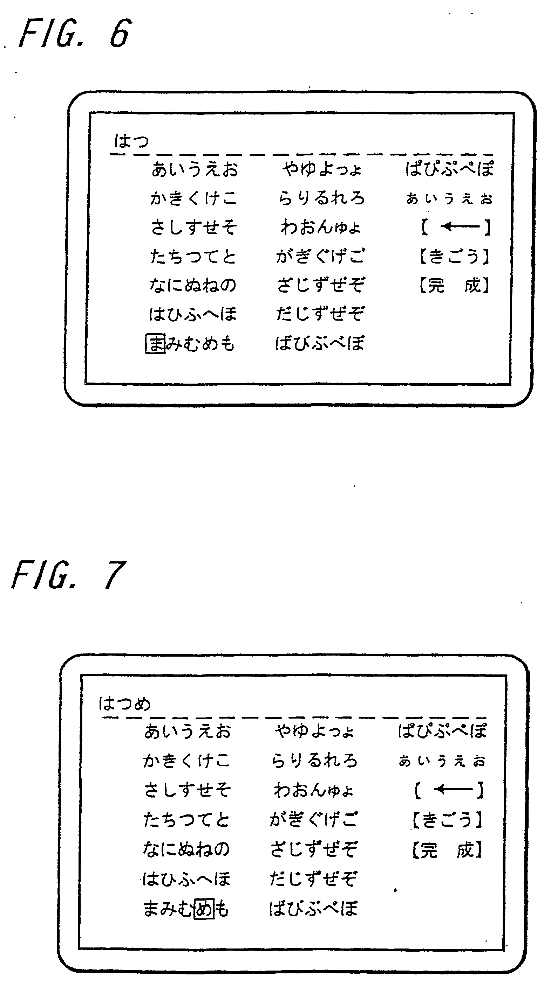

After the group 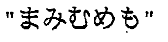 is selected, by pressing the control dial input apparatus 11 down, the selection is decided. When the selection is decided, as shown in FIG. 6, only 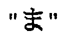 out of the group 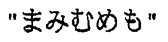 becomes a state of being selected.

Next, when the control dial input apparatus 11 is revolved further downward, a selected letter moves from 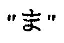 to 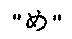 through 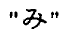 and 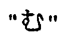 in this order. As shown in FIG. 7, when the control dial input apparatus 11 is pressed down after selecting the 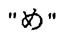 , the third letter 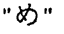 is decided and the given letter is registered as the third letter of the title and displayed. Meanwhile, when the control dial input apparatus 11 is revolved further upward, a selected letter returns from 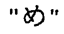 to 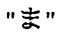 through 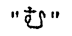 and 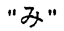 in this order.

Here, when the group is erroneously selected, for example, when a group 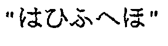 is selected instead of the group 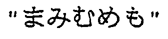 , by revolving the control dial input apparatus 11 downward, a letter for selection moves from 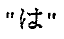 to 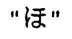 through 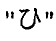 , 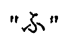 and 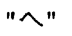 in this order and with its further downward revolution, the whole group 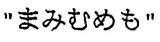 is selected next to 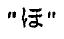 . After that, as the letter 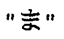 is selected by pressing again the control dial input apparatus 11 down to decide the given selection, the letter 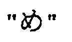 is preferably decided in accordance with the above mentioned procedure.

Further, when a once selected group erroneously moves to another group, because the once selected group is memorized, one letter of the given group is automatically selected at a time of returning again to the group. For example, even when after selecting the group 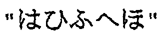 , the group erroneously moves to the group 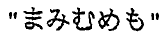 , if the control dial input apparatus 11 is revolved upward, the 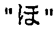 is selected. Also, even when after selecting the group 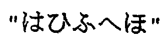 , the group erroneously moves to the group 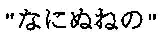 by revolving the control dial input apparatus 11 downward, the 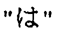 is selected.

Also, at a time of inputting the title 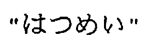 when 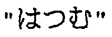 is erroneously inputted, by selecting a "[←]" on the display screen shown in FIG. 4, the last inputted 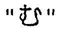 is erased, thereby making it possible to input again.

Further, after inputting of the title 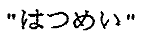 is finished, when a 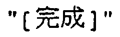 (which is pronounced as "KANSEI" and means completion in English) is selected on the display screen shown in FIG. 4, the inputting of the title is completed.

Meanwhile, in the above embodiment of the present invention, an explanation has been made on the video camera, but the letter input apparatus according to the present invention is not limited to the video camera, and it is needless to say that it also includes an arbitrary apparatus and method in which a letter is inputted by way of the control dial input apparatus such as in a cellular phone, an electronic pocket notebook, a television remote controller, a set top box and the like.

As it is apparent from the above explanation, according to the letter input apparatus and method, it is possible to make two dimensional selection by way of the control dial input apparatus in a one dimensional input type, doesn't occupy much space and at the same time, is capable of being operated by a single hand and conducting letter input in good operability.

## Claims

1. A letter input apparatus comprising:
an input unit (11) operable to generate a command signal in response to a forward revolution, a backward revolution or a press-down of said input unit;
a control unit (12) operable to generate letter information in dependence upon said command signal;
a conversion unit (13) operable to generate image information in dependence upon said letter information; and
a display unit (1) operable to display said image information generated by said conversion unit (13);
wherein said display unit (1) is operable to two-dimensionally arrange and display letters available for selection via said input unit (11) and said control unit (12) has a first mode for selecting a group of letters from those displayed on said display unit (1) and a second mode for selecting a given letter from said selected group of letters.

2. An apparatus according to claim 1, wherein said selection of a group of letters or of a given letter within a selected group of letters by said control unit is conducted by a command signal generated by a forward revolution or a backward revolution of said input unit and a change-over between said first mode and said second mode of said control unit is conducted by a command signal generated in response to a press-down of said input unit.

3. An apparatus according to claim 1, wherein selection of a group of letters or of a given letter within a selected group of letters by said control unit and a change-over between said first mode and said second mode of said control unit are conducted by a command signal generated in response to a forward revolution or backward revolution of said input unit.

4. A letter input method comprising the steps of:
generating a command signal in response to a forward revolution, a backward revolution or a press-down of an input unit (11);
generating (12) letter information in dependence upon said command signal;
generating image information in dependence upon said letter information; and
displaying (1) said image information to a user,
wherein said letters that are available for selection via said input unit are two-dimensionally arranged and displayed to the user, a first mode is used for selecting a group of letters from those displayed, and a second mode is used for selecting a given letter from said selected group of letters.

5. A method according to claim 4, wherein said selection of a group of letters or of a given letter within a selected group of letters is conducted by a command signal generated by a forward revolution or a backward revolution of said input unit and a charge-over between said first mode and said second mode is conducted by a command signal generated in response to a press-down of said input unit.

6. A method according to claim 4, wherein selection of a group of letters or of a given letter within a selected group of letters and a change-over between said first mode and said second mode are conducted by a command signal generated in response to a forward revolution or backward revolution of said input unit.

## Patentansprüche

1. Buchstabeneingabevorrichtung, welche aufweist:
eine Eingabeeinheit (11), die betreibbar ist, ein Befehlssignal als Antwort auf eine Vorwärtsdrehung, eine Rückwärtsdrehung oder einer Druckbetätigung der Eingabeeinheit zu erzeugen;
eine Steuereinheit (12), die betreibbar ist, eine Buchstabeninformation in Abhängigkeit vom Befehlssignal zu erzeugen;
eine Umsetzungseinheit (13), die betreibbar ist, eine Bildinformation in Abhängigkeit von der Buchstabeninformation zu erzeugen; und
eine Anzeigeeinheit (1), die betreibbar ist, die Bildinformation, welche durch die Umsetzungseinheit (13) erzeugt wird, anzuzeigen;
wobei die Anzeigeeinheit (1) betreibbar ist, Buchstaben, die für die Auswahl verfügbar sind, über die Eingabeeinheit (11) zweidimensional anzuordnen und anzuzeigen, und die Steuereinheit (12) eine erste Betriebsart hat, um eine Gruppe von Buchstaben von denjenigen auszuwählen, die auf der Anzeigeeinheit (1) angezeigt werden, und eine zweite Betriebsart, um einen bestimmten Buchstaben von der ausgewählten Gruppe von Buchstaben auszuwählen.

2. Vorrichtung nach Anspruch 1, wobei die Auswahl einer Gruppe von Buchstaben oder eines bestimmten Buchstabens innerhalb der ausgewählten Gruppe von Buchstaben durch die Steuereinheit durch ein Befehlssignal durchgeführt wird, welches durch eine Vorwärtsdrehung oder eine Rückwärtsdrehung der Eingabeeinheit erzeugt wird, und eine Umschaltung zwischen der ersten Betriebsart und der zweiten Betriebsart der Steuereinheit durch ein Befehlssignal durchgeführt wird, welches als Antwort auf eine Druckbetätigung der Eingabeeinheit erzeugt wird.

3. Vorrichtung nach Anspruch 1, wobei die Auswahl einer Gruppe von Buchstaben oder eines bestimmten Buchstabens innerhalb der ausgewählten Gruppe von Buchstaben durch die Steuereinheit und eine Umschaltung zwischen der ersten Betriebsart und der zweiten Betriebsart der Steuereinheit durch ein Befehlssignal durchgeführt werden, welches als Antwort auf eine Vorwärtsdrehung oder einer Rückwärtsdrehung der Eingabeeinheit erzeugt wird.

4. Buchstabeneingabeverfahren, welches folgende Schritte aufweist:
Erzeugen eines Befehlssignals als Antwort auf eine Vorwärtsdrehung, eine Rückwärtsdrehung oder eine Druckbetätigung einer Eingabeeinheit (11);
Erzeugen (12) einer Buchstabeninformation in Abhängigkeit vom Befehlssignal;
Erzeugen einer Bildinformation in Abhängigkeit von der Buchstabeninformation; und
Anzeigen (1) der Bildinformation einem Benutzer;
wobei die Buchstaben, welche für die Auswahl über die Eingabeeinheit verfügbar sind, zweidimensional angeordnet sind und dem Benutzer angezeigt werden, eine erste Betriebsart verwendet wird, eine Gruppe von Buchstaben von denjenigen, die angezeigt werden, auszuwählen, und eine zweite Betriebsart verwendet wird, einen bestimmten Buchstaben von der ausgewählten Gruppe von Buchstaben auszuwählen.

5. Verfahren nach Anspruch 4, wobei die Auswahl einer Gruppe von Buchstaben oder eines bestimmten Buchstabens innerhalb einer ausgewählten Gruppe von Buchstaben durch ein Befehlssignal durchgeführt wird, welches durch eine Vorwärtsdrehung oder eine Rückwärtsdrehung der Eingabeeinheit erzeugt wird, und eine Umschaltung zwischen der ersten Betriebsart und der zweiten Betriebsart durch ein Befehlssignal durchgeführt wird, welches als Antwort auf eine Druckbetätigung der Eingabeeinheit erzeugt wird.

6. Verfahren nach Anspruch 4, wobei die Auswahl einer Gruppe von Buchstaben oder eines bestimmten Buchstabens innerhalb einer ausgewählten Gruppe von Buchstaben und eine Umschaltung zwischen der ersten Betriebsart und der zweiten Betriebsart durch ein Befehlssignal durchgeführt werden, welches als Antwort auf eine Vorwärtsdrehung oder eine Rückwärtsdrehung der Eingabeeinheit erzeugt wird.

## Revendications

1. Appareil d'entrée de lettres comprenant :
une unité d'entrée (11) qui peut fonctionner pour générer un signal de commande en réponse à une révolution vers l'avant, à une révolution vers l'arrière ou à une pression vers le bas de ladite unité d'entrée ;
une unité de commande (12) qui peut fonctionner pour générer une information de lettre en fonction dudit signal de commande ;
une unité de conversion (13) qui peut fonctionner pour générer une information d'image en fonction de ladite information de lettre ; et
une unité d'affichage (1) qui peut fonctionner pour afficher ladite information d'image qui est générée par ladite unité de conversion (13),
dans lequel ladite unité d'affichage (1) peut fonctionner pour agencer et afficher bidimensionnellement des lettres disponibles pour une sélection via ladite unité d'entrée (11), et ladite unité de commande (12) présente un premier mode pour sélectionner un groupe de lettres parmi celles qui sont affichées sur ladite unité d'affichage (1) et un second mode pour sélectionner une lettre donnée à partir dudit groupe sélectionné de lettres.

2. Appareil selon la revendication 1, dans lequel ladite sélection d'un groupe de lettres ou d'une lettre donnée à l'intérieur d'un groupe sélectionné de lettres au moyen de ladite unité de commande est mise en oeuvre au moyen d'un signal de commande qui est généré au moyen d'une révolution vers l'avant ou d'une révolution vers l'arrière de ladite unité d'entrée, et une permutation entre ledit premier mode et ledit second mode de ladite unité de commande est mise en oeuvre au moyen d'un signal de commande qui est généré en réponse à une pression vers le bas de ladite unité d'entrée.

3. Appareil selon la revendication 1, dans lequel une sélection d'un groupe de lettres ou d'une lettre donnée à l'intérieur d'un groupe sélectionné de lettres au moyen de ladite unité de commande et une permutation entre ledit premier mode et ledit second mode de ladite unité de commande sont mises en oeuvre au moyen d'un signal de commande qui est généré en réponse à une révolution vers l'avant ou à une révolution vers l'arrière de ladite unité d'entrée.

4. Procédé d'entrée de lettres comprenant les étapes de :
génération d'un signal de commande en réponse à une révolution vers l'avant, à une révolution vers l'arrière ou à une pression vers le bas d'une unité d'entrée (11);
génération (12) d'une information de lettre en fonction dudit signal de commande ;
génération d'une information d'image en fonction de ladite information de lettre ; et
affichage (1) de ladite information d'image pour un utilisateur,
dans lequel lesdites lettres qui sont disponibles pour une sélection via ladite unité d'entrée sont agencées et affichées bidimensionnellement pour l'utilisateur, un premier mode est utilisé pour sélectionner un groupe de lettres à partir de celles affichées et un second mode est utilisé pour sélectionner une lettre donnée à partir dudit groupe sélectionné de lettres.

5. Procédé selon la revendication 4, dans lequel ladite sélection d'un groupe de lettres ou d'une lettre donnée dans un groupe sélectionné de lettres est mise en oeuvre au moyen d'un signal de commande qui est généré au moyen d'une révolution vers l'avant ou d'une révolution vers l'arrière de ladite unité d'entrée, et une permutation entre ledit premier mode et ledit second mode est mise en oeuvre au moyen d'un signal de commande qui est généré en réponse à une pression vers le bas de ladite unité d'entrée.

6. Procédé selon la revendication 4, dans lequel une sélection d'un groupe de lettres ou d'une lettre donnée dans un groupe sélectionné de lettres et une permutation entre ledit premier mode et ledit second mode sont mises en oeuvre au moyen d'un signal de commande qui est généré en réponse à une révolution vers l'avant ou à une révolution vers l'arrière de ladite unité d'entrée.
